# EUROPEAN PATENT APPLICATION

(11) **EP 2 424 098 A1**
(43) Date of publication of application: **29.02.2012**
(21) Application number: 10251522.8
(22) Date of filing: 27.08.2010
(51) Int. Cl.: H02M 3/335

(54) **Primary side sensing of an isolated converter**

(71) Applicant: NXP B.V., 5656 AG Eindhoven (NL)
(72) Inventor: Halberstadt, Hans, Redhill Surrey RH1 1DL (GB)
(74) Representative: Hardingham, Christopher Mark

(57) **Abstract**

A switching circuit (200; 300) comprising an inductive component (206; 306) including at least one winding, and a switch (204; 304) coupled between a power source (202; 302) and the inductive component (206; 306). The switch (204; 304) is configured to transfer power from the power source (202; 302) to the inductive component (206; 306) in accordance with a switch control signal. The switching circuit (200; 300) also comprises a controller (208; 318), configured to integrate the voltage across the inductive component (206; 306) in order to generate a signal (532) representative of a current in the inductive component (206; 306), compare the signal (532) representative of the current in the inductive component with a threshold value (534); identify a time T1 when the current (532) is below the threshold value (534); and determine an output voltage (510) of the switching circuit at identified time T1.

## Description

The present disclosure relates to the field of switching circuits and methods of operating switching circuits, and particularly, although not exclusively, switching circuits that have a controller that is configured to measure an output voltage of the switching circuit.

In known switched mode power supplies (SMPS) with mains isolation and control at the primary side, it can be necessary to sense the output variable that is to be regulated, for example, output voltage, output current or output power. The sensed output variable can then be used to regulate the SMPS so that the output is at the desired level. It is known to sense the output variable, compare it with a reference value at the secondary side, and send an error signal representative of the comparison to the primary side for regulation.

European patent application no. EP 1639694 (NXP B.V.) discloses a signal processing arrangement for generating a measure of reflected power being transferred through a transformer from the measure of the magnetising current and the measure of hard switching.

One or more embodiments disclosed herein seek to provide an accurate measure of an output voltage of a switching circuit.

The listing or discussion of a prior-published document or any background in the specification should not necessarily be taken as an acknowledgement that the document or background is part of the state of the art or is common general knowledge.

According to a first aspect of the invention, there is provided a switching circuit comprising:
an inductive component including at least one winding; and
a switch coupled between a power source and the inductive component, wherein the switch is configured to transfer power from the power source to the inductive component in accordance with a switch control signal; and
a controller configured to:
   integrate the voltage across the inductive component in order to generate a signal representative of a current in the inductive component, this current may be referred to as an emulated current;
   compare the signal representative of the current in the inductive component with a threshold value;
   identify a time T1 when the current is below the threshold value; and
   determine an output voltage of the switching circuit at identified time T1.

In this way, the output voltage can be determined at a time when it can be accurately determined based on specific operating conditions of the switching circuit, as opposed to a theoretical duration of a switching cycle of the circuit. This can provide improvements over prior art that uses a fixed time delay to identify the best time to determine the output voltage, as embodiments of the present invention can be adaptable to changes in the operating conditions of the switching circuit.

The inductive component may be a transformer, and in such examples, the controller may be configured to integrate the voltage across the magnetizing inductance of the transformer in order to generate the signal representative of the current in the transformer. Switching circuits that use a transformer as the inductive component include flyback converters, and embodiments of the invention can be useful for providing feedback whilst maintaining mains isolation between the primary and secondary sides of the transformer without having to use an opto-coupler as is known in the prior art.

The switching circuit may be configured to regulate its output in accordance with the determined output voltage of the switching circuit. This can provide for improved performance of the switching circuit in accordance with the feedback provided by the controller, which can represent a more accurate value for the output voltage than is achievable by the prior art.

The threshold value may be about zero, and this can be a convenient identifier that the switching cycle is nearing an end in the secondary stroke, that is when the current in the inductive component has reached zero.

The threshold value may be offset from zero by an amount to compensate for component inaccuracies. The threshold value may be small amount above zero, for example of the order of 0.5 volts for low power applications and of the order of 100mV at a maximum amplitude of an emulated signal of 5V. In this way, the identification of time T1 is typically just before the end of the secondary stroke, and the likelihood that time T1 occurs after the end of the secondary stroke is reduced. It is appreciated that the output voltage starts ringing after the end of the secondary stroke, and therefore determining the output voltage slightly before the end of the secondary stroke is acceptable, but determining the output voltage just after the end of the secondary stroke can give a big error and therefore may be considered as unacceptable. It has been identified that a more accurate determination of the output voltage can be made before the end of the secondary stroke, as opposed to just after the end of the secondary stroke.

The controller may be configured to integrate the voltage across the inductive component with a first time constant during a primary stroke of the switching circuit and a second time constant during a secondary stroke of the switching circuit, in order to generate the signal representative of a current in the inductive component such that the secondary stroke of the signal representative of the current in the inductive component is shorter than the secondary stroke of the actual current in the inductive component. A different time constant may be applied during the first and secondary strokes such that the signal representative of the current in the inductive component falls to zero before the actual current in the inductive component falls to zero.

The difference in time constant may be a small amount, for example of the order of 1%, 2%, 3%, 5% or 10% of the amplitude of the emulated current. The difference in time constant can provide a compensation for any variations in component values and operating conditions. In this way, the chances of the identified time T1 being after the secondary stroke can be reduced. In some examples, use of a difference in time constant that is a proportion of the emulated current may be preferred to a fixed offset value, as this can reduce the likelihood that too large an offset is used for low loads when the current is less. It will be appreciated that if the offset is too large, then the identification of T1 may be too far in advance of the end of the secondary stroke such that it provides an inaccurate reading.

The controller may be configured to identify the instance in time T1 as the first time that the current falls below the threshold value for a secondary stroke of the switching cycle of the switching circuit. Determining the output voltage at this moment in time can provide a particularly accurate determination.

The circuit may comprise an auxiliary winding coupled to the inductive component, wherein the auxiliary winding can be configured to provide a signal that is useable by the controller to generate the signal representative of the current in the inductive component.

The switching circuit may comprise a current adapter that is configured to adapt the signal that is provided by the auxiliary winding so that it is suitable for the controller to integrate in order to generate the signal representative of the current in the inductive component. The current adapter may be a current divider. The current adapter may be configured to adapt the signal that is provided by the auxiliary winding so that it is suitable for an integrator of the controller, and in some examples an internal capacitor of an integrator/operational amplifier of the controller. The signal may be adapted by reducing the current such that it is suitable for an internal capacitance of an operational amplifier of the integrator, for example. In some examples, it can be advantageous for the signal that is provided by the auxiliary winding to be a high voltage for determining the output voltage at T1, and a low voltage for integrating. Therefore, a current adapter/divider can transform a signal that is suitable determining an output voltage to a signal that is suitable for integrating.

The auxiliary winding may be configured to provide a signal that is useable by the controller to determine the output voltage of the switching circuit at time T1. Alternatively, a second, different, auxiliary winding may be coupled to the inductive component, and may be configured to determine the output voltage of the switching circuit at time T1. That is, one auxiliary winding can be used to provide the emulator signal and determine T1, and a second auxiliary winding can be used to sample Vout at T1.

The controller may be configured to operate in:
the current domain when it is configured to generate the signal representative of the current in the inductive component; and
the voltage domain when it is configured to determine the output voltage of the switching circuit at time T1.

The controller may comprise an integrator, which may be configured to operate in the current domain in order to generate the signal representative of the current in the inductive component. In other examples, the integrator may be configured to operate in the voltage or digital domain.

The controller may be configured to determine the momentary voltage at the auxiliary winding at time T1, that is, the controller may operate in the voltage domain at time T1.

Embodiments that have a single pin for receiving a signal for both i) integrating and ii) determining the output voltage can be advantageous. The controller may comprise one or more components (such as a current adapter) that can process a received signal (for example from an auxiliary winding) such that it is suitable for both i) integrating and ii) determining the output voltage. Depending upon the implementation of the controller, a signal may be suitable for integrating or determining the output voltage in terms of restrictions on current and/or voltage.

The controller may be configured to determine the output voltage of the switching circuit at time T1 by sampling/averaging the signal that is provided by the auxiliary winding.

The controller may comprise a comparator configured to determine the time T1 by comparing the emulated current with the threshold value.

The controller may comprise an integrator configured to generate the signal representative of the current in the inductive component, wherein the integrator comprises:
a reset pin, which is configured to receive a reset signal indicative of the current in the inductive component being zero, and wherein the integrator is configured to be reset in accordance with the reset signal; and/or
an amplifier comprising an offset cancelling circuit.

The reset signal indicative of the current in the inductive component being zero may represent an indication of the end of the secondary stroke, or a turning point (which may be referred to as a "valley" or a "top") in a voltage value at the auxiliary winding, or a turning point in the drain voltage during free resonance. Free resonance is defined as resonance during the interval where both current in the transformer and parasitic capacitances at the transformer winding nodes ring, without forward current flowing in any diode in the output, auxiliary supply or primary clamping circuitry.

The switching circuit may be a flyback converter, a boost converter, a buck converter, or any other type of switched mode power supply (SMPS) where energy is temporarily stored in an inductive component and released to an output thereafter.

According to a further embodiment of the invention, there is provided a method of operating a switching circuit, the switching circuit comprising:
an inductive component including at least one winding; and
a switch coupled between a power source and the inductive component, wherein the switch is configured to transfer power from the power source to the inductive component in accordance with a switch control signal;
the method comprising:
integrating the voltage across the inductive component in order to generate a signal representative of a current in the inductive component;
comparing the signal representative of the current in the inductive component with a threshold value;
identifying a time T1 when the current is below the threshold value; and
determining an output voltage of the switching circuit at identified time T1.

Integrating the voltage across the inductive component in order to generate the signal representative of the current in the inductive component may also comprise applying a different time constant when generating the signal representative of the (emulated) current in the inductive component such that the signal is scaled to a value that is less than the current in the inductive component during a secondary stroke of the switching circuit. This can be used to compensate for inaccuracies and variations in components of the circuit as the end of the secondary stroke is determined from the emulated current before the actual end of the secondary stroke. In this way, a "buffer" is provided between the time T1 and the end of the secondary stroke.

Applying a different time constant may comprise applying a first time constant for the primary stroke and applying a second time constant during the secondary stroke of the switching circuit. Applying a different time constant may comprise operating a switch in order to introduce or remove a resistor at the input to the controller, which may be the input to the integrator in some examples. Introducing a resistor at the input to the controller may lead to a reduction in the signal representative of the current in the inductive component.

The method may further comprise regulating, or otherwise controlling the operation of, the switching circuit in accordance with the determined output voltage.

There may be provided a computer program, which when run on a computer, causes the computer to configure any apparatus, including a switching circuit, controller, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

A description is now given, by way of example only, with reference to the accompanying drawings, in which:
Figure 1 illustrates a prior art flyback converter with error feedback via an optocoupler;
Figure 2 illustrates a switching circuit according to an embodiment of the invention;
Figure 3 illustrates a switching circuit according to a further embodiment of the invention;
Figure 4 graphically illustrates operation of a flyback converter according to an embodiment of the invention;
Figure 5 illustrates a controller according to an embodiment of the invention;
Figure 6 illustrates a circuit for averaging an Aux_sense signal over a window according to an embodiment of the invention;
Figure 7 illustrates the results of a simulation of the circuit of Figure 4;
Figure 8 illustrates an integrator according to an embodiment of the invention that is configured to operate in the voltage domain;
Figure 9 illustrates an integrator according to an embodiment of the invention that is configured to operate in the current domain;
Figure 10 illustrates a controller according to another embodiment of the invention;
Figure 11 illustrates an integrator with offset compensation according to an embodiment of the invention;
Figure 12 illustrates an integrator according to another embodiment of the invention;
Figure 13 illustrates a controller according to another embodiment of the invention; and

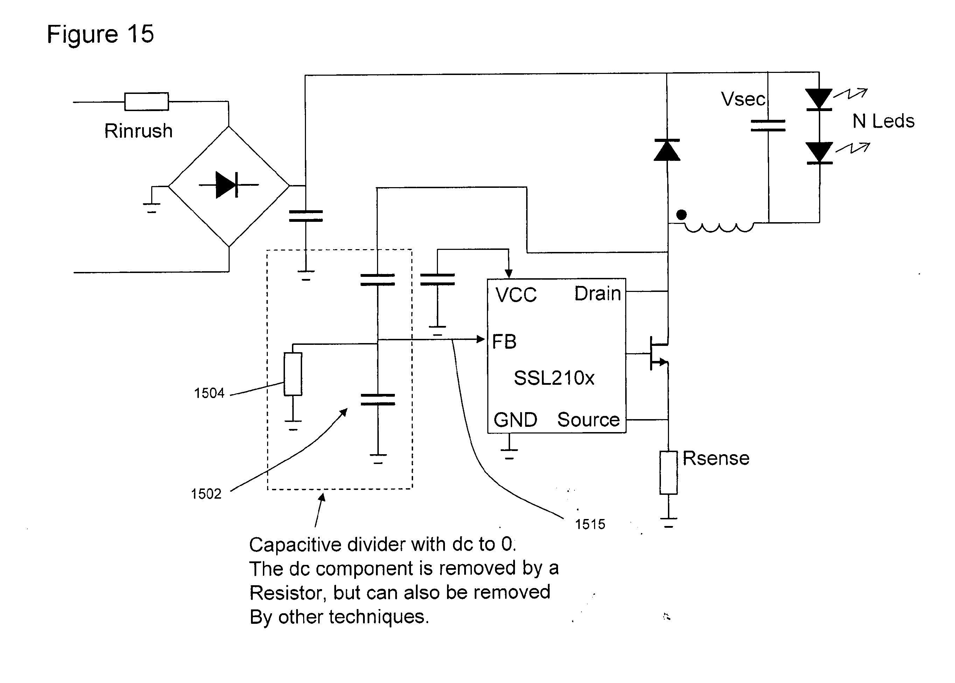

Figures 14 and 15 illustrate further embodiments for providing a signal to a controller according to an embodiment of the invention.

One or more embodiments described herein relate to a switching circuit, such as a flyback converter, that has an inductive component including at least one winding and a switch coupled between a power source and the inductive component. Power can be transferred from a power source to the inductive component by operating the switch in accordance with a switch control signal.

The switching circuit can also include a controller that is configured to identify an instance in time (T1) when the current through the inductive component is below a threshold value, and this instance in time (T1) can be just before the end of a secondary stroke in the operation of the switching circuit. The controller is then configured to measure the output voltage of the switching circuit at the identified instance in time (T1). It has been appreciated that a more accurate reading for the output voltage can be made towards the end of the secondary stroke as, amongst other things, the impact of series impedances in the circuit can have less impact as the current approaches zero. Embodiments disclosed herein can dynamically identify T1, without having to rely on use of a fixed estimation for T1 that may not be accurate.

Some embodiments of the invention can relate to the use of a single controller that can receive a single signal, and use the single signal for both identifying T1 and measuring the output voltage. This can involve the controller being able to operate in both the current and voltage domain at different times

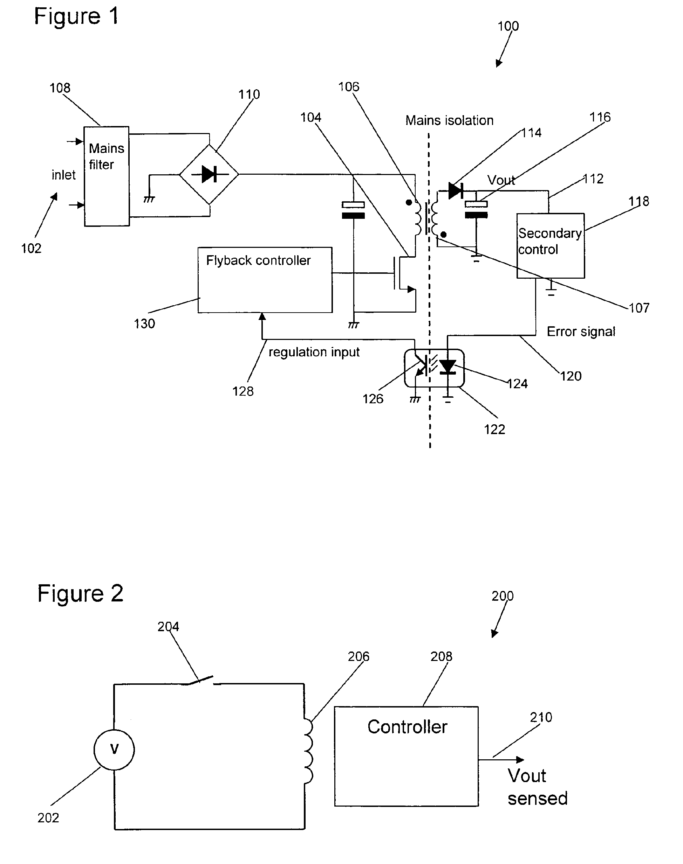

Figure 1 illustrates a prior art flyback converter that senses an output variable, generates an error signal 120, and can send the error signal 120 to the primary side of the flyback converter via an optocoupler 122.

The circuit of Figure 1 receives a mains power signal 102, which is provided to a bridge rectifier 110 via a mains filter 108. The positive output of the bridge rectifier 110 is provided to a first terminal of the primary side 106 of a transformer. The second terminal of the primary side 106 of the transformer is coupled to the source of a field effect transistor (FET) 104, and the drain of the FET 104 is connected to the negative output of the bridge rectifier 110. The FET 104 is configured to operate as a switch that is connected in series with the power source 102 and the primary side 106 of the transformer such that power can be transferred from the power source 102 to the primary side 106 of the transformer when the switch is closed.

The FET 104 is operated in accordance with a switch control signal received at its gate from a flyback controller 130. The flyback controller 130 is configured to cause the conduction channel of the FET 104 between the source and the drain to periodically conduct (thereby closing the switch) such that a desired output voltage 112 is provided at the output of the circuit.

The secondary side 107 of the transformer is connected to a diode 114 and a capacitor 116 in series, as is known in the art. The signal at the junction between the diode 114 and capacitor 116 is taken as the output voltage 112, and in this example is also provided to a secondary control component 118. The secondary control component 118 compares the output voltage (or any other output variable, such as current or power) with a reference value in order to generate an error signal 120 representative of the difference between the two signals.

The error signal 120 is provided to the light emitting diode 124 of an optocoupler 122, such that the error signal 120 can be passed from the secondary side of the circuit/transformer to a photo detector 126 of the optocoupler 122 that is associated with the primary side of the circuit/transformer. It will be appreciated that use of an optocoupler 122 maintains isolation between the primary and secondary sides of the circuit, which is a known feature of flyback converters. The signal received at the photo detector 126 is then provided to the flyback controller 130 as a regulation input 128 such that the flyback controller 130 can adjust the operation of the FET/switch 104 in order to regulate the output to the desired level taking into account the error signal that has been received.

In some examples, an optocoupler 122 and a secondary control 118 can be considered as too expensive, and this may be particularly true in the low power adaptor market. Therefore, it may be desirable to provide a switching circuit that does not include an optocoupler.

Figure 2 illustrates a switching circuit 200 according to an embodiment of the invention. The switching circuit 200 comprises a power source 202, a switch 204 and an inductive component 206 all connected in series. As is known in the art, the switch 204 is operated in order to selectively transfer power from the voltage source 202 to the inductive component 206. A primary stroke can be considered as the period of time that the switch is closed, and a secondary stroke can be considered as the period of time that the switch is open and there is energy present in the inductive component 206 (that is, up until the inductor current reaches zero). In this example, the inductive component 206 comprises a single winding, although in other embodiments a transformer having two or more windings may be used.

It will be appreciated that power source 202, switch 204 and inductive component 206 can be part of a flyback converter or any other type of switched mode power supply (SMPS) where energy is temporarily stored in an inductor during a primary stroke and transferred to an output during a secondary stroke. Such SMPS's can include a Buck converter, a Boost converter, and a Buck-Boost converter.

The switching circuit 200 also comprises a controller 208 that is configured to output a signal 210 representative of the output voltage of the switching circuit 200. This output signal (Vout sensed) 210 can be used to regulate the switching circuit 200.

In this example, the controller is configured to integrate the voltage across the inductive component 206 in order to generate a signal representative of a current in the inductive component 206. The generated signal may be referred to as an emulated current. The controller can then compare the signal representative of the current with a threshold value. The threshold value can be selected such that it is representative of a current level near the end of a secondary stroke of the operation of the switching circuit, but preferably not after the end of the secondary stroke.

The controller 208 can then identify an instance in time T1 when the current drops below the threshold value, typically a value that is close to zero, and it has been recognised that this instance in time can be representative of a good time to measure the output voltage of the switching circuit as an accurate measurement of the output voltage can be made. This can be because the impact of any series impedances in the switching circuit 200 can be reduced/at a minimum when the current is low, and therefore a reduced proportion of the output voltage may be dropped across these series impedances.

In some embodiments, the threshold value can be selected to provide an offset before the end of the secondary stroke to account for any variations in component values, and also ensure that the measurement of the output voltage can be performed before the end of the secondary stroke, without running the risk that the measurement is inadvertently taken after the end of the secondary stroke when it will be less accurate, for example.

Examples of implementations of the controller 208 are provided below.

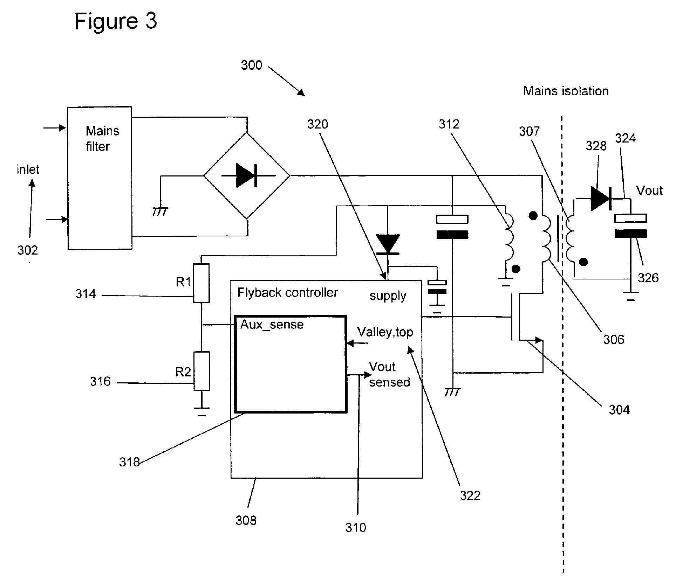

Figure 3 illustrates a switching circuit 300 according to another embodiment of the invention. The switching circuit 300 is based on a flyback converter, and components that have been described in relation to the flyback converter of Figure 1 will not be described again here.

The switching circuit 300 includes an auxiliary/additional winding 312 coupled to the primary winding 306 of the transformer. A signal that is experienced by the auxiliary winding 312 due to it's proximity to the transformer 406, 407 is used as an input to the flyback controller 308. More particularly, an aux_sense module 318 of the flyback controller 308 is used to process the signal experienced by the auxiliary winding 312 as described in more detail below. The aux_sense module 318 may be considered as a controller in its own right. It will be appreciated that the use of an auxiliary winding 312 maintains the isolation between the primary and secondary windings of the transformer of the flyback converter.

In order to regulate the output of the switching circuit 300, for example the output voltage 324 of the switching circuit 300, it is possible to use the voltage across the transformer windings to sense the output voltage at a specific instance in time. Although sensing signals at "instances in time" may be referred to, it will be appreciated that in some examples this can be considered as sampling a signal over a short period of time, that is during a specific window.

By using a transformer with an auxiliary winding 312 at the primary side with a certain turns ratio with respect to the secondary winding 307, the sensed output voltage can also be made available at the auxiliary winding 312 during the specific window at which it is to be measured. In this way the optocoupler of Figure 1 is not required, because the voltage at the auxiliary winding 312 can now be used to regulate the output of the switching circuit 300.

It has been appreciated that there may be differences between the actual output voltage and the voltage at the physical connection of the secondary transformer winding 307. This can be due to the diode forward voltage and series impedance of the rectifier diode(s) 328, for example. Also the equivalent series resistance (ESR) of the output electrolytic capacitor 326 can increase the sensed voltage, while only a small part of this increase actually increases the average output voltage at the output electrolytic capacitor 326. Another issue is that impedances inside the transformer, including leakage inductances to the auxiliary winding 312, can also provide an inaccuracy in the sensed output voltage. In light of the above, it has been appreciated that measuring the sensed output voltage when the current in the secondary circuit is close to zero can provide a more accurate measurement of the true output voltage.

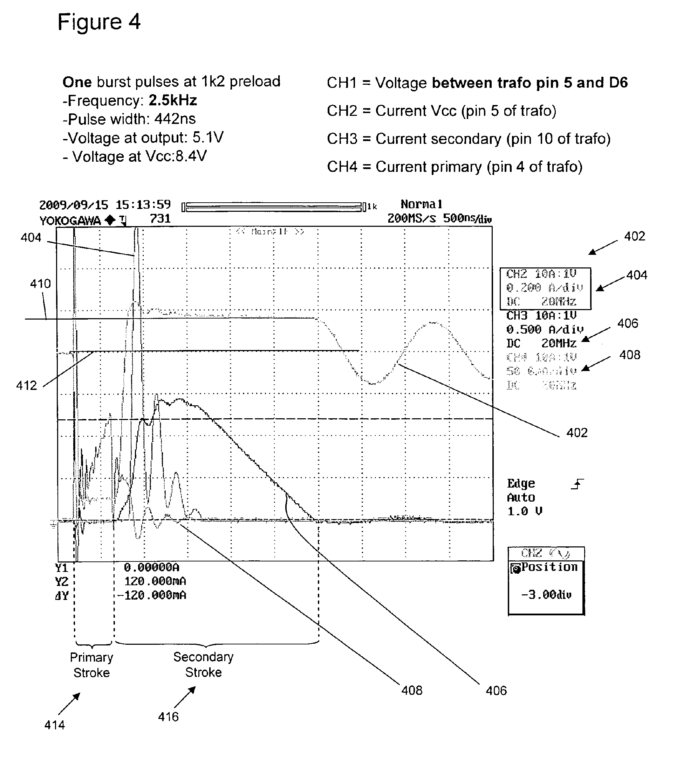

Figure 4 illustrates graphically current and voltage values at nodes in the flyback converter switching circuit 300 of Figure 3. The flyback converter is operated in boundary conduction mode or discontinuous conduction mode in this example, and therefore the current in the secondary circuit (shown as channel 3 406 in Figure 4) is high at the start of the secondary stroke 416 and a significant ringing is present. During the secondary stroke 416 the ringing damps out and the current gradually reduces to 0.

Figure 4 illustrates four channels: channel 1 402 shows the voltage at the auxiliary winding 312 (which can be considered as corresponding to the output voltage); channel 2 404 shows the current in another auxiliary winding (not shown in Figure 3) that is used to supply the controller IC; channel 3 406 shows the current in the secondary winding 307; and channel 4 408 shows the current in the primary circuit/winding 306.

Also shown in Figure 4 is a first horizontal line 410 that represents the voltage at the auxiliary winding 312 just before the current in the auxiliary winding 406 drops to zero. It is this measurement of the voltage in the auxiliary winding 312 that is desired, as it most accurately reflects the true output voltage. It can be seen that the voltage at the auxiliary winding 312 rises to a value above the horizontal line 410 at the start of the secondary stroke 416, and then gradually falls to the final voltage level 410 at an instance in time when the current in the secondary winding 406 falls to zero.

The current in another auxiliary winding (not shown in Figure 3) that is used to supply the controller IC as shown by channel 2 404 indicates that the voltage at the auxiliary winding is an even less accurate representation of the output voltage when this current 404 is non-zero.

A second horizontal line 412 is shown in Figure 4, and illustrates that the average voltage at the auxiliary winding 402 is zero after the transformer is demagnetized. The output voltage falls from the value represented by horizontal line 410 (the voltage at the auxiliary winding 312 just before the current in the secondary winding 406 drops to zero) and then oscillates about zero 412 until the next primary stroke 414.

In examples where the current flow in the secondary winding 307 and the auxiliary winding 312 are used to supply the flyback controller 408 (which may be an integrated circuit (IC)), the measured voltage at the auxiliary winding 312 will be somewhere in-between the (reflected) voltage of the secondary output 324 and the voltage at the auxiliary winding 312 that is used to supply the flyback controller 408, depending on the leakage inductance network between the different windings. This represents one reason to measure the output voltage at a moment that the current in all other windings is zero. In most cases the other winding is the auxiliary winding, although in some embodiments there may be a first auxiliary winding to supply the IC and a second auxiliary winding to sense the output voltage using a highohmic divider. In some examples it can be beneficial for the current in the first auxiliary winding to be zero when the output voltage is measured, whereas the current in any other windings may not be considered as disadvantageous. The output current in the secondary winding 307 and the current in the auxiliary winding 312 that are used to supply the flyback controller 308 can be the same order of magnitude at low loads. The result is that the current in the auxiliary winding 312 that is used to supply the flyback controller 308 flows during a larger part of the secondary stroke, and therefore gives the undesired effect of mixing both voltages over a longer part of the secondary stroke.

In low power adapter applications, the input power that is consumed at "no load" is an issue that can be important. Current regulations specify that "no load" input power levels must be kept below 30mWatt. Therefore, further advantages can be provided by being able to accurately measure the output voltage at the end of the secondary stroke as it is possible to show that the regulations have been satisfied without having to overly limit the output voltage, for example by using a dummy load, which would reduce the efficiency of the circuit. Therefore, it has been found that sampling the output voltage at the end of the secondary stroke (when the current drops to zero, just before the end of the secondary stroke) gives an additional advantage for measuring the output voltage accurately at no load.

Assuming that the value at the end of the secondary stroke fits best to the output voltage (as illustrated by horizontal line 410), it can be seen from Figure 4 that there is an error in the voltage at the auxiliary winding 402 for times up until the current in the secondary winding drops to zero 406, as the auxiliary winding voltage has a negative slope from its peak value down to the horizontal line 410. This error can be related to the series resistance of components in the circuit, and can therefore be reduced by several percent by measuring the voltage at the auxiliary winding (and hence the output voltage) at an instance in time that is close to, but just before, the end of the secondary stroke. One or more embodiments disclosed herein can be considered as relating to a method and a circuit that can identify this instance in time. State of the art methods are known to use a fixed sampling moment, for example 2 microseconds, after the start of the secondary stroke as a compromise between the technology available and an achievable accuracy.

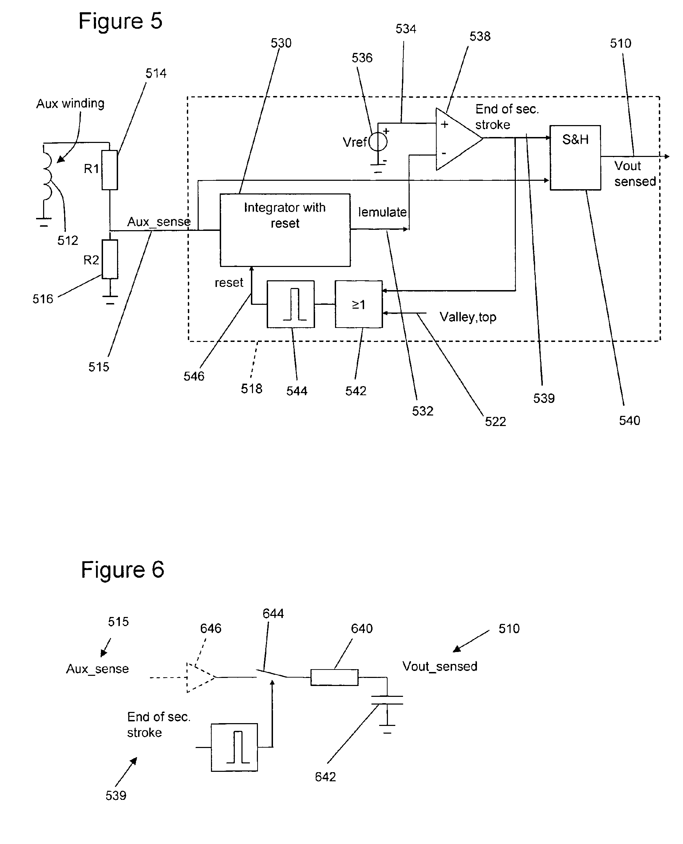

Figure 5 illustrates an embodiment of an aux-sense module 518, that can be part of the flyback controller 308 of Figure 3. The aux-sense module 518 receives an aux_sense input representative of the voltage across the auxiliary winding 512, a valley,top input 522 representative of a turning point (dV/dt=0) in the voltage at a switching node in the circuit. The aux_sense module 518 provides a "Vout sensed" output 510 that represents the measured value for the output voltage, and can be used for circuit regulation, for example.

In Figure 5, the aux_sense module 518 has an integrator 530, which is provided with an Aux_sense input 515 from a resistive divider. The resistive divider comprises two resistors R1 514 and R2 516 in series between the auxiliary winding 512 and ground. The junction between the two resistors R1 514 and R2 516 is connected to the aux_sense module 518 at an Aux_sense input.

The integrator 530 is configured to provide an lemulate signal 532 that is representative of the current in the magnetizing inductance of the transformer, and the lemulate signal 532 may be considered as an "emulated" current. The current in the magnetizing inductance is the sum of the currents in all of the individual windings scaled by the turns ratio. This determination of the lemulate signal 532 can be performed in either the voltage domain, current domain, or digital domain, depending upon the implementation that is chosen:
- In the voltage domain, the Aux_sense input 515 is a highohmic node, where a voltage equal to the voltage across the auxiliary winding 512 divided by R1, R2 is available for integrating and sampling the sensed output voltage.
- In the current domain, the Aux_sense input 515 is a lowohmic node, where a current equal to the voltage across the auxiliary winding 512 divided by R1 is available for integrating. If the current domain is used, it may be necessary to change to the voltage domain for sampling the sensed output voltage.

An advantage to using the current domain is that negative voltages at an aux_sense input pin of an associated IC can be prevented, or at least the likelihood of negative voltages at the pin can be reduced. Negative voltages can be undesirable for most integrated circuit (IC) processes, as special constructions may be necessary to account for negative voltages.

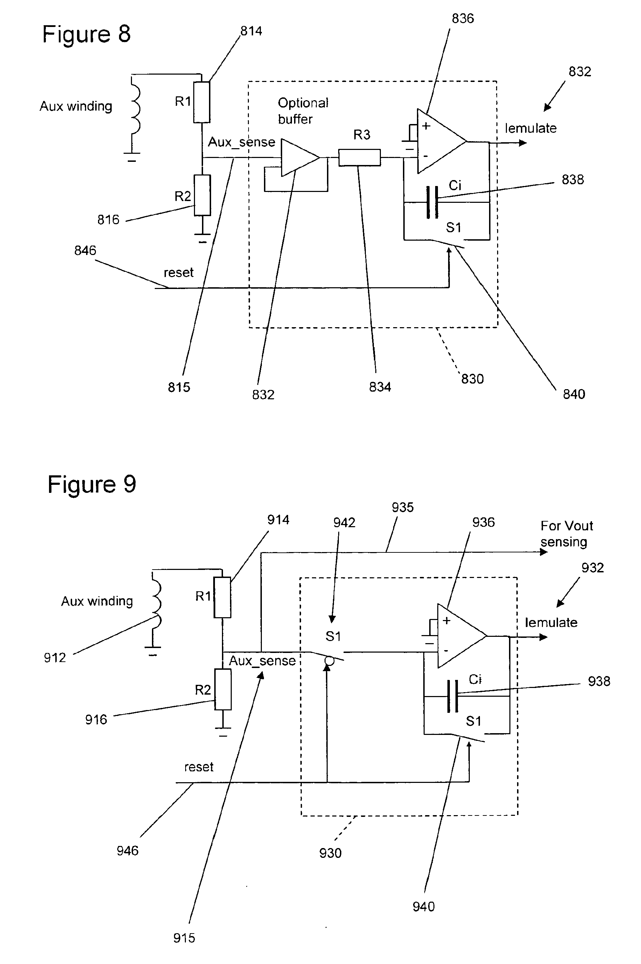

Examples of integrators 530 that are configured to operate in the current and voltage domain are described below with reference to Figures 8 and 9.

The lemulate signal 532 is compared with a reference current signal 534 representative of a threshold value by comparator 538. In this example, the reference signal 534 is provided by a DC voltage source 536 that provides a voltage with a value of Vref. In this embodiment, the value of the reference current signal 534 is close to zero in order for the output 539 of the comparator 538 to change at the end of the secondary stroke when the lemulate signal 532 drops below the reference current signal 534.

The reference signal and/or reference voltage 536 may represent a threshold value that is offset from zero by an amount to compensate for component inaccuracies. The threshold value may be small amount above zero, for example of the order of 0.5 volts for low power applications and of the order of 100mV at a maximum amplitude of an emulated signal of 5V. It will be appreciated that these examples are non-limiting, and that the value for the threshold value can be set in accordance with specific operation conditions.

In some examples, the threshold value can depend on the ratio between primary stroke time and secondary stroke time and an offset voltage of the integrator 530 input in relation to the amplitude of the voltage to be integrated.

In examples where the integrator 530 is provided by an integrated (on chip) RC circuit, there is often a limitation of the voltage that can be provided to a pin of the circuit of "minus one diode voltage" (Vd). In a flyback converter, the current in the magnetizing inductor rises during the primary stroke with di/dt=Vin//L and falls during the secondary stroke with di/dt=-Vout/L (where Vout is scaled with the turns ratio between the primary and secondary sides of the transformer). For nominal output voltages at high mains (230 x √2=325V), the turns ratio is often chosen at approximately 1/4 Vout/Vin=75/325. For a low power adapter example, the output voltage can fall to 40% of its nominal value that has to be measured. This can be considered as a worst case ratio between primary stroke and secondary stroke of approx 1:10. Assuming an offset voltage of +/-5mV and an input voltage of -0.5V maximum during the primary stroke and +50mV during secondary stroke (giving the 1:10 ratio), the secondary stroke of the integrator 530 gives an error in the slope of the emulated current 532 of 5mV/50mV=10%, while the error during the primary stroke is only 5mV/500mV=1%. This gives an 11 % too long or too short emulated secondary stroke. Assuming an amplitude of the emulator voltage of 5V, this 11 % corresponds with a threshold of 11% of 5V=500mV to guarantee that T1 is never later than the end of the actual secondary stroke. However this also means that T1 can be detected as much as 22% before the end of the secondary stroke at the opposite offset voltage. With external R, the input of the integrator is a virtual ground, so the minus one Vd constraint is no limitation and the voltage at the integrator input (the aux winding before the R) can be much larger. In this case the threshold can be much smaller, because the error in T1 due to offsets is much less.

The output signal 539 of the comparator 538 is provided as a control input to a sample and hold component 540. Provided as the analogue input to the sample and hold component 540 is the Aux_sense input 515 representative of the voltage across the auxiliary winding 512. In this way, the voltage across the auxiliary winding 512 (Aux sense 515) is sampled when the comparator output 539 is representative of the lemulate signal 532 dropping below the threshold value represented by the reference current signal 534.

Alternatively, the (divided) voltage at the auxiliary winding as provided by the Aux_sense signal 515 can be averaged over a window that is close to the end of the secondary stroke. This is an extension to the basic sample and hold principle, where theoretically the time window is infinitely small. Averaging the Aux_sense signal 515 over a window can be performed by the circuit of Figure 6 instead of the sample and hold component 540 of Figure 5. The circuit of Figure 6 receives the Aux_sense signal 515 and the output signal 539 of the comparator 538. The output signal 539 of the comparator 538 is used to operate a switch 644 such that the Aux_sense signal 515 is provided to a resistor 640 and capacitor 642 in parallel (thereby defining an RC timing circuit) in order for the sensed output voltage to be provided at the junction between the resistor 640 and capacitor 642. In some embodiments, providing the Aux_sense input 515 directly to the switch 644 of Figure 6 can load R1 514, and R2 516 of Figure 5, which can lead to an error in the time constant. Therefore, a optional buffer 646 can be placed between the switch 644 and the node from which the Aux_sense signal 515 is received to prevent a being current drawn from resistors R1 514, and R2 516 of Figure 5.

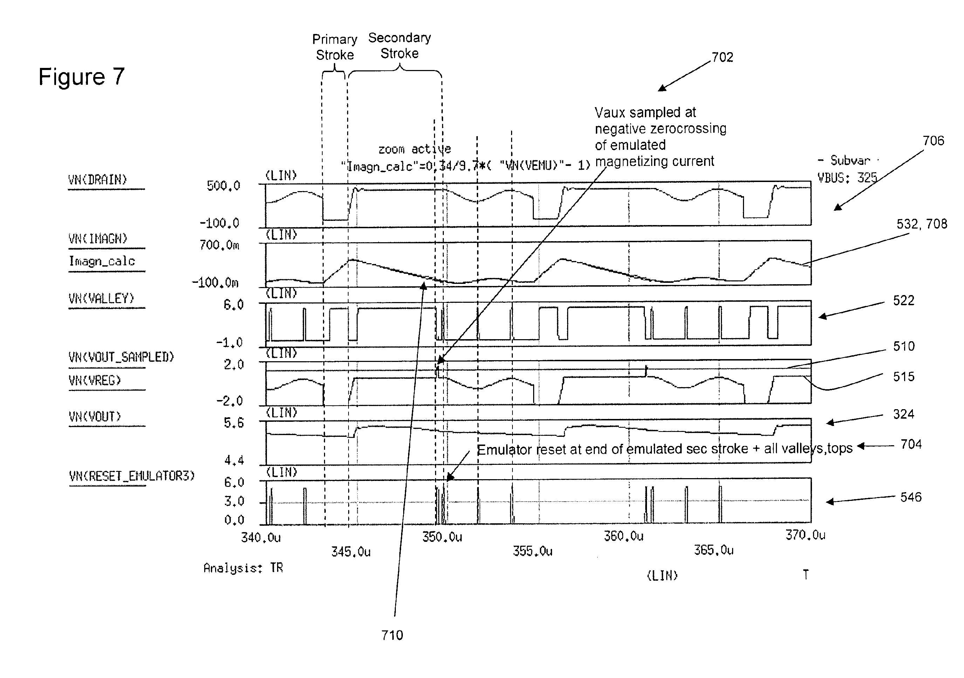

In order to determine the integration constant of the integrator 530, the emulated current (lemulate 532) can be set to an actual value at a "moment in time" that the integrator output 532 is not needed, thereby regulating the integrator 530. It is known that after the end of the secondary stroke, the voltage across the magnetizing inductance resonates due to the LC circuit provided in combination with the parasitic capacitance at the drain node of the FET switch, thereby causing energy to resonate between the magnetizing inductance and the parasitic capacitance. At the valleys or tops of the resonating voltage, the current in the magnetizing inductance is zero, and therefore the integrator 530 can be reset to zero at the valleys or tops. This can be seen from the waveform with reference 708 in Figure 7 (Imagn), which represents the current in the magnetizing inductance of the transformer. Therefore, a "valley" or "top" is an example of a "moment in time" that is suitable for resetting the integrator 530. An additional example of a "moment in time" that the integrator 530 can be reset is when the output of the comparator 538 goes high as this represents the end of the secondary stroke. Resetting the integrator 530 at this moment may be necessary when the next primary stroke is started immediately after the secondary stroke ends (for example in boundary conduction mode of operation). In such examples, there will be no subsequent valleys or tops at which the integrator can be reset 530.

The "valleys" and "tops" can be considered as moments when the rate of change of the voltage with respect to time (dv/dt) at a switching node (for example the drain node of the primary MOST 304 in Figure 3, or the voltage at the auxiliary winding 312, 512) is zero. This so called 'valley' or 'top' can be detected by a circuit called a "valley detector" as is well known in the art, for example as provided by the TEA1507 GreenChip™ II SMPS control IC as provided by NXP, and a signal can be received from a valley detector is illustrated by the "valley,top" signal 522 in Figure 5.

As shown in Figure 5, a logical OR gate 542 is provided, with its inputs provided by the output signal 539 of the comparator 538 and the valley,top signal 522. The output of the OR gate 542 is provided as an input to a pulse generator 544, the output signal 546 of which is connected to a reset pin of the integrator 530. In this way, the integrator 530 is reset when the emulated current approaches zero or there is a turning point (dV/dt=0) in the voltage at a switching node.

It will be appreciated that this example of resetting the integrator 530 enables a DC level of the integrator 530 to be set and controlled, thereby providing the integrator 530 with the functionality to account for any non-ideal components that occur in practical circuits. The idea of resetting the integrator 530 at a moment that the actual current in the inductor is zero can be considered as an important improvement over the prior art, including EP 04744355.1, as this method can provide a proper value for the magnetizing current during the complete interval/switching cycle.

Figure 7 illustrates the results of a simulation of the circuit of Figure 3 with the Aux-sense module 518 of Figure 5.

The first waveform 706 at the top of Figure 7 is the voltage at the drain of the FET 304 of Figure 3, and represents a voltage at the primary side of the converter.

The second graph in Figure 7 illustrates two waveforms that are very similar to each other; the first waveform 532 is the emulated current (lemulate) 532, and is also shown in Figure 5; the second waveform 708 is the current in the magnetizing inductance of the transformer. As will be discussed in more detail below, the emulated current (lemulate) 532 can use a different time constant during the secondary stroke of the switching circuit so that the emulated current is deliberately offset from the actual current in the magnetizing inductance of the transformer 306 as it approaches zero. Such a region when the currents 532, 708 approach zero is indicated in Figure 7 with reference 710. The offset can be provided by applying a slightly larger slope of the emulated current 532 during the secondary stroke, and this slightly larger slope causes the emulated current to reach zero before the actual magnetizing current 708 reaches zero.

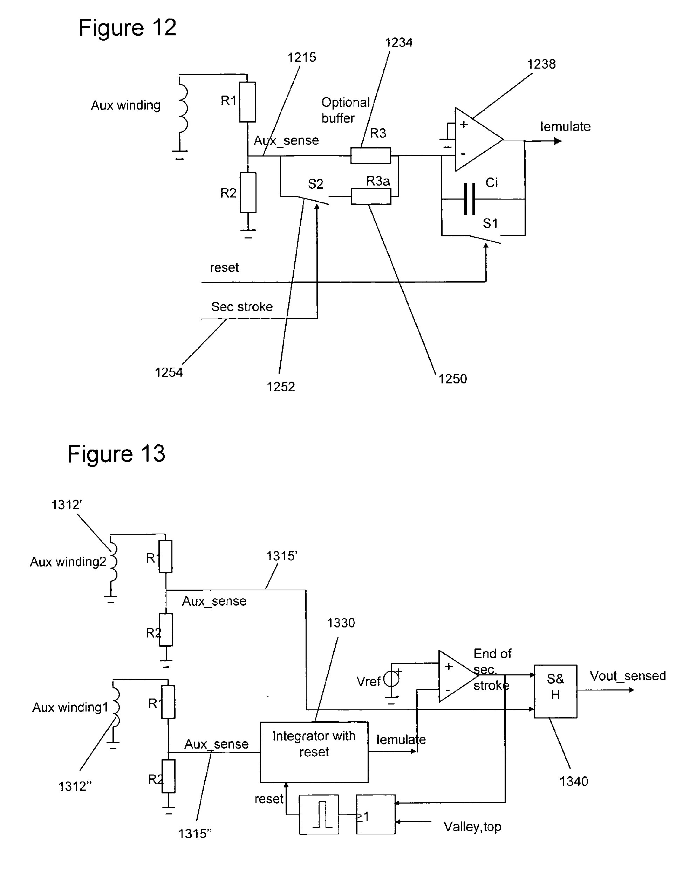

Applying a different time constant may comprise applying a first time constant for the primary stroke and a second, different, time constant for the secondary stroke of the switching circuit. An example implementation for changing the time constant for the primary and secondary strokes is described below with reference to Figure 12.

The value for the difference in time constants can be selected so as to reduce the likelihood that T1 is identified too early or late for specific operational conditions. The load of the circuit and/or peak current are examples of operational conditions that may be used to adjust the time constant. The difference in time constant may be a small amount, for example of the order of 1%, 2%, 3%, 5% or 10% of the amplitude of the voltage across the magnetizing inductance. Although a difference in time constant of about 10% of the maximum amplitude of the emulated signal may be suitable for some examples, in other examples a few percent (for example, 1%, 2%, 3% or 5%) is more desirable in order to reduce the likelihood that the auxiliary voltage (Vaux) is sampled too early. Advantages of using different time constants can include an automatic consideration of the peak current in the primary winding of a transformer, particularly during low loads, where problems may exist with fixed offset sampling as the possibility of measuring the output voltage too early may be increased. This is because the fixed offset can become a larger proportion of the emulated signal for low loads.

The third waveform in Figure 7 is the "valley,top" signal 522 that is shown in Figure 5. As discussed above, this signal 522 provides an indication when the value of dv/dt at a switching node is zero, and can be used to reset the integrator 530.

The fourth graph in Figure 7 also illustrates two waveforms; the first waveform 515 represents the Aux_sense signal that is shown in Figure 5, and represents a proportion of the voltage across the auxiliary winding as defined by the resistive divider; the second waveform 510 represents Vout sensed 510 as shown in Figure 5, and is held at the value of Aux_sense 515 when it is sampled/averaged. At the beginning of the sampling/averaging process, the aux_sense input 515 is switched from the current domain to the voltage domain, therefore reaching a higher voltage value as defined by the R1/R2 ratio and auxiliary voltage. During the current domain operation window, the impedance at the integrator input is low, but not zero, therefore the voltage sensed during current domain operation gives the same shape as the auxiliary voltage, but with a lower amplitude, while during the sampling interval the low impedance is removed such that the correct amplitude of the auxiliary voltage can be measured.

The fifth waveform of Figure 7 illustrates the actual value of the output voltage 324 of the converter of Figure 3. The output voltage 324 has a degree of ripple, which is smoothed out by the capacitor 326.

The bottom waveform of Figure 7 illustrates the reset signal 546 for the integrator 530. As illustrated by reference 704, the integrator/emulator is reset at the end of the emulated secondary stroke and at all valleys/tops.

Figure 8 illustrates an integrator 830 according to an embodiment of the invention that is configured to operate in the voltage domain, although it will be appreciated that the integrator function can be realized in many ways. The integrator 830 receives an Aux_sense input 815 from a resistive divider 814, 816 in the same way as discussed with reference to Figure 5. In this embodiment, the voltage at the Aux_sense input pin 815 is also available for sensing the output voltage. The integrator 830 includes an operational amplifier (opamp) 836 with integrator function, with a feedback capacitor Ci 838 between the opamp output and the negative input of the opamp 836. The voltage to be integrated is first converted to a current by resistor R3 834, and then integrated via the feedback capacitor Ci 838.

In order to sense the output voltage accurately, an optional buffer 832 can be provided between the Aux_sense input pin 815 and the input to the opamp 836. This may be required if the internal conversion resistor (R3 834) is not large compared to the external divider (R1 814 and R2 816), which is typically the case as R1 814 and R2 816 are external resistors and R3 834 is an internal resistor. In fact, in some embodiments the buffer 832 may not be needed for the integrator function because the output signal lemulate 832 will be compared with a value of about zero - this means that the scaling factor of the integrator 830 may not be important in determining the shape of the lemulate signal 832, and it will still return to zero at about the same time even if the scaling is incorrect. However, in embodiments where the Aux_sense node 815 is used for voltage sensing, the optional buffer 832 may be used to prevent, or reduce, a voltage division error.

Figure 9 illustrates an integrator 930 according to an embodiment of the invention that is configured to operate in the current domain. In this example, the voltage at the auxiliary winding 912 is converted into a suitable current by the external resistor R1 914 and then integrated by an integrator circuit comprising an opamp 936 and feedback capacitor Ci 938. The integrator 930 also includes a switch S1 942 that is configured to disconnect the Aux_sense pin 915 from the opamp 936 whilst the integrator 930 is being reset. Switch S1 942 can also be used to disconnect the integrator 930 when the output voltage is being determined at time T1. Figure 9 illustrates how the Aux_sense signal 915 can also be provided for Vout sensing by circuit path 935. For example (and not shown in Figure 9), the circuit path 935 could be provided to a sample and hold component such as the one shown in Figure 5 with reference 540.

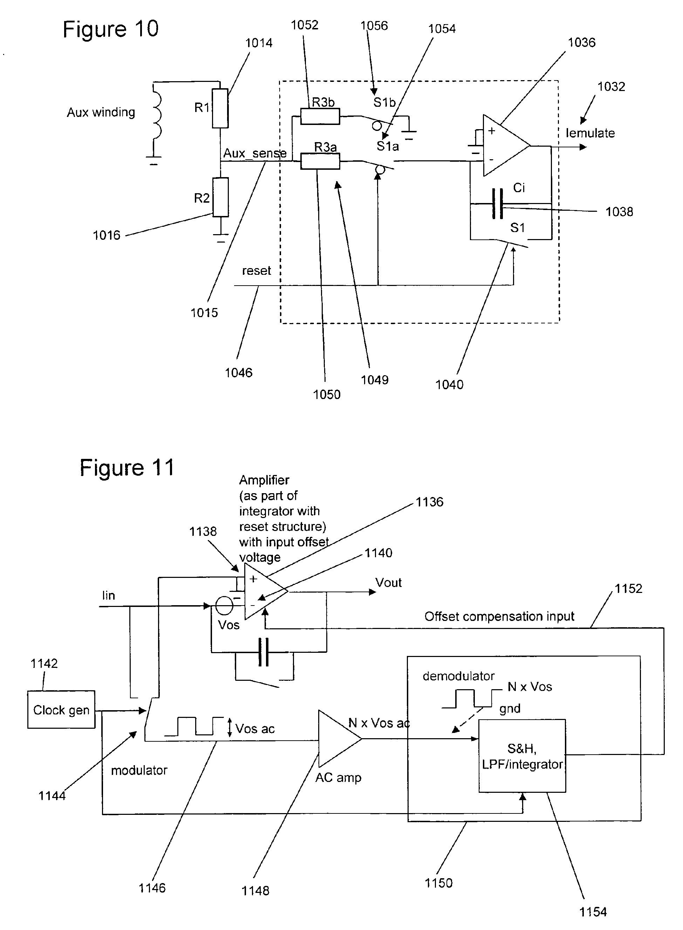

The feedback capacitor Ci 938 is often an integrated capacitor and therefore limited in size. As R1 914 is external, and therefore sensitive to parasitic capacitance, (which can be important when the aux sense node is switched to the voltage domain in order to sense Vout), noise injection and leakage, it operates at a relatively large current level. This can mean that the current level between R1 914 and Ci 938 is for most practical applications not matched. One solution for this problem is to include a current adapter, such as a current divider. An embodiment using this idea is shown in Figure 10, where two switches S1a, 1054 and S1b 1056 are used with matched ratios in the "on resistance" (R3a 1050 and R3b 1052) of each switch S1a, 1054 and S1b, 1056. These components can be considered as providing a current adapter/divider 1049. It will be appreciated that R3a 1050 and R3b 1052 can be considered as the resistance of the switches, or can be separate resistor components. Either way, matching the on resistances of the switches with the same ratio as that of R3a 1050 and R3b 1052 can increase the accuracy with which the division factor can be controlled.

The first of the two switches S1a, 1054 is configured to disconnect the Aux_sense pin 1015 from the opamp 1036 whilst the integrator 1030 is being reset in the same way as the switch 942 of Figure 9. The second of the switches S1b 1056 is operated at the same time as the first switch S1a 1054, and is configured to disconnect the Aux_sense pin 1015 from ground via an additional resistor R3b 1052. In this way, when the switches S1a 1054 and S1b 1056 are closed, the current that is provided at the Aux_sense input 1015 is split between the branches having the two switches S1a, 1054 and S1 b 1056, and therefore the current that is provided to the opamp 1036 from the Aux_sense pin 1015 is reduced when compared with the example of Figure 9.

Using a current divider, the integrator 1030 of Figure 10 becomes more sensitive to offset voltage. The error due to offset is equal to the ratio between input offset voltage of the opamp 1036 and the voltage drop across R3b 1052. Improved performance in terms of the effects of offset can be obtained by using a voltage across R3 (a combination of R3a 1050 and R3b 1052) that is as large as possible, taking into account parasitic components such as electrostatic discharge (ESD) devices and backgate connections of internal resistors.

In another embodiment, the idea of providing a low current to the opamp 1036 is used in combination with offset compensation techniques. An example of such an embodiment is illustrated by Figure 11, and it will be appreciated that the opamp 1136 could be the opamp in the integrator of any one of Figures 8, 9 or 10.

This principle of offset compensation periodically senses the difference between the voltage at the actual ground (positive input 1138 of the opamp 1136) and the negative input 1140 of the opamp 1136 (Vos). The timing of this periodic sensing is controlled by a clock generator 1142 controlling a switch 1144. On average, over a certain time window, this voltage difference should be zero, but in practice it is not zero due to voltage offset. Initially the voltage difference is measured for a discrete period of time such that a square wave signal having a non-zero value when the voltage is measured, and a zero value when the voltage difference is no measured, is generated. This square wave signal is given the name "Vos ac" 1146 in Figure 11. "Vos ac" 1146 is then amplified by an amplifier 1148 with gain factor N and demodulated by demodulator 1150 in order to provide a substantially DC offset compensation input signal 1152 that is fed back to control the opamp 1136. The demodulator 1150 uses the same clock signal from the clock generator 1142 that is used to control the periodic sampling. The demodulator 1150 comprises a S&H/LPF/filter component 1154 that can determine and integrate, and or filter, the amplitude of the amplified N x Vos signal. This loop can be used to regulate the offset voltage of the opamp 1136 to 0.

In addition to the integrator functionality described herein, embodiments of the invention also include the functionality to be able to detect the end of the secondary stroke and sample the output voltage (Vout); for example, as shown in Figures 3 and 5. Depending upon the method that is used for integration (voltage domain as shown in Figure 8 or current domain as shown in Figure 9), the output voltage can be sampled in different ways.

In examples, where the current is emulated in the voltage domain, the end of secondary stroke detection and output voltage (Vout) sampling can be straight forward as the aux_sense voltage is available during the complete period.

In examples, where the current is emulated in the current domain, the aux_sense voltage is only available when the integrator is allowed to be disconnected from the aux_sense input (by opening S1 942 in Figure 9 for example). In such examples, the signal 'end of sec stroke' can be used to create a small delay between disconnecting the aux_sense input from the integrator and measuring the auxiliary voltage. This is in order to allow the auxiliary voltage that is to be measured to adapt to the proper level when switching from the current domain to the voltage domain. After the delay, the auxiliary voltage is sampled. See Figure 7 where 515 represents a proportion of the voltage across the auxiliary winding (Vreg) and 510 represents the sampled output voltage (Vout_sampled).

Due to mismatches, it is possible that the end of secondary stroke may be detected too late. Therefore, in some embodiments, a small time shift can be used so that the end of the secondary stroke is detected slightly before the actual end of secondary stroke, and this can account for worst case matching so that it is highly unlikely that the identification of the end of the secondary stroke is identified after the next primary stroke has started. Two examples of implementing this shift will now be provided.

In one example, a small difference in integrator time constant can be applied between the primary stroke and the secondary stroke. One way of doing this is shown in Figure 12, whereby an additional resistor R3a 1250 is provided in parallel with the resistor R3 1234 between the Aux_sense input 1215 and the negative input pin of the comparator 1238 during the secondary stroke. The branch of the circuit that includes the additional resistor R3a 1250 is broken by opening switch S2 1252 during the primary stroke in accordance with a "sec stroke" input signal 1254. In this way, the current can be emulated such that it drops to zero more quickly during the secondary stroke than the actual output current. This is illustrated in Figure 7 where the slope of the emulated current 532 is steeper than the actual output current 708 in the region identified by reference 710 in Figure 7. It will be appreciated that increasing the rate that the emulated current falls to zero causes the output of the comparator 538 (which is indicative of the end of the secondary stroke) of Figure 5 to trigger earlier, thereby providing an offset before the end of the secondary stroke.

In some examples, it is the ratio between the time constants for the primary and secondary stroke that provides an advanced identification of the end of the secondary stroke. If the time constant for the secondary stroke is 10% higher than during the primary stroke, then the emulated secondary stroke is 10% shorter than the real secondary stroke. This can be implemented by decreasing the input resistance to the integrator during the primary stroke or increasing the input resistance to the integrator during the secondary stroke.

In another embodiment, with reference to Figure 5, the value (Vref) of the DC voltage source 536 is made slightly positive, thereby increasing the threshold value with which the emulated current is compared, thereby providing an offset in time from the end of the secondary stroke at which the output of the comparator 538 is triggered.

Figure 13 illustrates a further embodiment of the invention, that includes two auxiliary windings; a first auxiliary winding 1312', which provides a first Aux_sense signal 1315' directly to a sample and hold amplifier 1340 for determining the output voltage at an appropriate time; and a second auxiliary winding 1312", which provides a second Aux_sense signal 1315" directly to an integrator 1330 for determining the appropriate time, as discussed above. Alternatively one auxiliary winding can be used, but with two resistive dividers such that each resistive divider can provide an Aux_sense signal. An advantage of these embodiments is that processing of a single signal does not need to be performed in both the current and voltage domains (as with some of the embodiments disclosed herein), as a separate Aux_sense signal is provided for each of the current and voltage domains. However, a downside to this embodiment (in some applications at least) is that an additional pin needs to be provided on the integrated circuit (IC) to account for the additional auxiliary winding and associated circuitry.

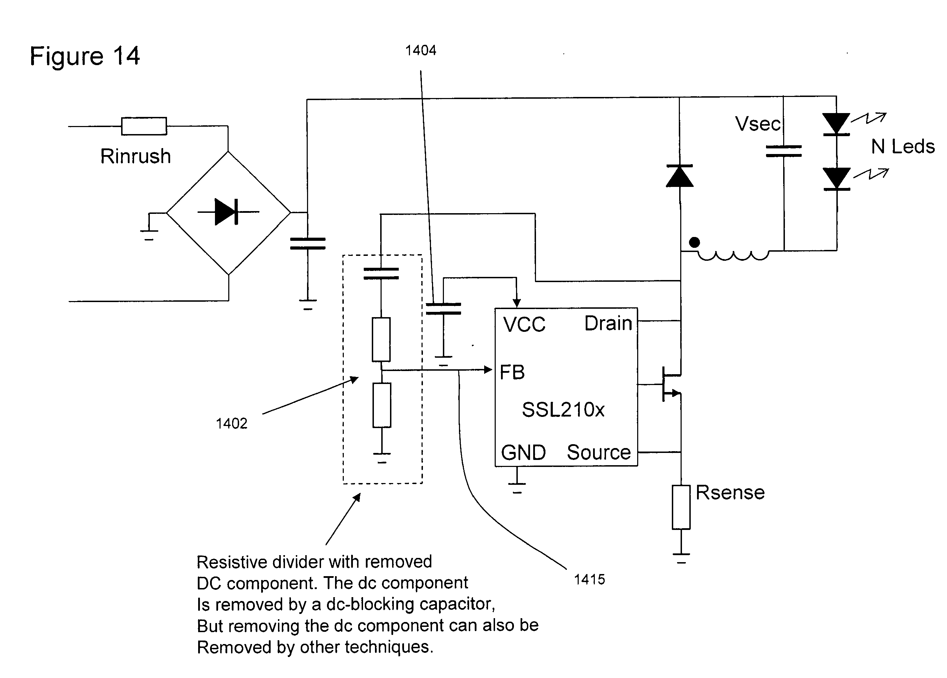

In other examples, an auxiliary winding may not be required as the Aux_sense signal can be provided by any other suitable means. For example, a resistive divider 1402 in series with a blocking capacitor 1404 can be used to provide the Aux_sense signal 1415, as shown in Figure 14. Alternatively, a capacitive divider 1502 with a resistor 1504 in parallel with the capacitor that is connected to ground can be used to provide the Aux_sense signal 1515. It will be appreciated that any known way of providing a signal that can be integrated in order to generate a signal representative of a current in the inductive component and can be used to determine the output voltage of the switching circuit can be used, and that an auxiliary winding is just one example of a component that can do this.

Features of one or more of the embodiments disclosed herein can include one or more of:
- A switched mode power converter where energy is stored in an inductor or transformer during the primary stroke and transferred to the output during the secondary stroke;
- A method for emulation of a magnetizing current in the inductor or transformer by integrating the voltage across the inductor or a winding of the transformer;
- A method of comparing the emulated current with a value close to 0 in order to determine a moment T1 close to the end of the secondary stroke;
- A method of
   o Sampling the voltage across the inductor or auxiliary winding at a moment T1; or
   o Averaging the voltage across the inductor or auxiliary winding starting at a moment T1 for an interval deltaT1;
- Providing a combination of the following two functions by a single pin:
   o Sensing the voltage at the auxiliary winding (Vaux) at the end of the secondary stroke using the pin as voltage sensor; and
   o Integrating the voltage at the auxiliary winding (Vaux) in the current domain using the pin as current sensor;
- Resetting an integrator during intervals where the magnetizing current reaches zero in order to compare the emulated current with a value close to 0;
- Providing a combination of the following two functions:
   o Output voltage (Vout) sensing in the voltage domain; and
   o Current emulation in the current domain;
   with the advantage of preventing, or reducing the likelihood of, negative voltages at the pin.

Embodiments disclosed herein can be considered as addressing problems with inaccuracy of output voltage sensing via an auxiliary winding due to series resistance between output capacitor and transformer, and can increase the margins with respect to the accuracy of output voltage (Vout) accuracy at no load input power.

Embodiments disclosed herein can be used with low power adapters with flyback, and also for solid state lighting applications with buck converter or boost converters, as non-limiting examples.

## Claims

1. A switching circuit (200; 300) comprising:
an inductive component (206; 306) including at least one winding; and
a switch (204; 304) coupled between a power source (202; 302) and the inductive component (206; 306), wherein the switch (204; 304) is configured to transfer power from the power source (202; 302) to the inductive component (206; 306) in accordance with a switch control signal; and
a controller (208; 318), configured to:
integrate the voltage across the inductive component (206; 306) in order to generate a signal (532) representative of a current in the inductive component (206; 306);
compare the signal (532) representative of the current in the inductive component with a threshold value (534);
identify a time T1 when the current (532) is below the threshold value (534); and
determine an output voltage (510) of the switching circuit at identified time T1.

2. The switching circuit (200; 300) of claim 1, wherein the inductive component is a transformer, and the controller (208; 318) is configured to integrate the voltage across the magnetizing inductance of the transformer in order to generate the signal (532) representative of the current in the transformer.

3. The switching circuit (200; 300) of claim 1 or claim 2, wherein the controller (200; 318) is configured to integrate the voltage across the inductive component with a first time constant during a primary stroke of the switching circuit and a second time constant during a secondary stroke of the switching circuit, in order to generate the signal representative of a current in the inductive component such that the secondary stroke of the signal (532) representative of the current in the inductive component is shorter than the secondary stroke of the actual current in the inductive component (206; 306).

4. The switching circuit (200; 300) of claim 3, wherein the controller is configured to operate a switch (1252) in order to introduce or remove a resistor (1250) at the input to the controller in order to apply a different time constant for the primary and secondary strokes of the switching circuit.

5. The switching circuit (200; 300) of any preceding claim, wherein the switching circuit (200; 300) is configured to regulate its output in accordance with the determined output voltage (510) of the switching circuit.

6. The switching circuit (200; 300) of any preceding claim, wherein the threshold value (534) is about zero.

7. The switching circuit (200; 300) of any preceding claim, wherein the threshold value (534) is offset from zero by an amount to compensate for component inaccuracies.

8. The switching circuit (200; 300) of any preceding claim, wherein the controller (208; 318) is configured to identify the instance in time T1 as the first time that the current (532) falls below the threshold value (534) for a secondary stroke of the switching cycle of the switching circuit (200; 300).

9. The switching circuit (200; 300) of any preceding claim, wherein the switching circuit (200; 300) comprises an auxiliary winding (312) coupled to the inductive component (306), wherein the auxiliary winding (312) is configured to provide a signal (515) that is useable by the controller (208; 318) to generate the signal (532) representative of the current in the inductive component (206; 306).

10. The switching circuit (200; 300) of claim 9, further comprising a current adapter (1049) that is configured to adapt the signal (1015) that is provided by the auxiliary winding so that it is suitable for integrating by the controller.

11. The switching circuit (200; 300) of claim 9 or claim 10, wherein the auxiliary winding (512) is configured to provide a signal (515) that is useable by the controller (518) to determine the output voltage (510) of the switching circuit at time T1.

12. The switching circuit (200; 300) of any preceding claim, wherein the controller (208; 318) is configured to operate in:
the current domain when it is configured to integrate the voltage across the inductive component (206; 306) in order to generate the signal (532) representative of the current in the inductive component; and
the voltage domain when it is configured to determine the output voltage (510) of the switching circuit at time T1.

13. The switching circuit (200; 300) of any preceding claim, wherein the controller (208, 318) is configured to determine the output voltage (510) of the switching circuit at time T1 by sampling/averaging the signal (515) that is provided by the auxiliary winding (312).

14. The switching circuit (200; 300) of any preceding claim, wherein the controller (208; 318) comprises an integrator (530) configured to integrate the voltage across the inductive component (206; 306) in order to generate the signal representative of the current in the inductive component (206; 306), wherein the integrator (530) comprises:
a reset pin, which is configured to receive a reset signal (546) indicative of an identification of the end of the secondary stroke or a turning point in a voltage at a node in the switching circuit; and/or
an amplifier 1136 comprising an offset cancelling circuit.

15. A method of operating a switching circuit (200; 300), the switching circuit (200; 300) comprising:
an inductive component (206; 306) including at least one winding; and
a switch (204; 304) coupled between a power source (202; 302) and the inductive component (206; 306), wherein the switch (204; 304) is configured to transfer power from the power source to the inductive component (206; 306) in accordance with a switch control signal;
the method comprising:
integrating the voltage across the inductive component in order to generate a signal (532) representative of a current in the inductive component (206; 306);
comparing the signal (532) representative of the current in the inductive component with a threshold value (534);
identifying a time T1 when the current (532) is below the threshold value; and
determining an output voltage (510) of the switching circuit at identified time T1.
